# FASCICULE DE BREVET EUROPEEN

(11) **EP 2 162 888 B1**
(45) Date de publication et mention de la délivrance du brevet: **16.04.2014**
(21) Numéro de dépôt: 08760610.9
(22) Date de dépôt: 05.06.2008
(51) Int. Cl.: G21C 19/46

(54) **UTILISATION DE L'OXIME DE BUTYRALDEHYDE EN TANT QU'AGENT ANTI-NITREUX DANS UNE OPERATION DE DESEXTRACTION REDUCTRICE DU PLUTONIUM**
VERWENDUNG VON BUTYRALDEHYDOXIM ALS ANTI-NITRAT-AGENS IN EINEM VERFAHREN ZUR REDUKTIVEN RÜCKEXTRAKTION VON PLUTONIUM
USE OF BUTYRALDEHYDE OXIME AS ANTI-NITROUS AGENT IN AN OPERATION FOR THE REDUCTIVE BACK-EXTRACTION OF PLUTONIUM

(30) Priorité: 07.06.2007 FR 0755544
(43) Date de publication de la demande: 17.03.2010
(73) Titulaire: Commissariat à l'Énergie Atomique et aux Énergies Alternatives, 75015 Paris (FR)
(72) Inventeur: DINH, Binh, F-30130 Pont-Saint-Esprit (FR); BARON, Pascal, F-30200 Bagnols Sur Ceze (FR); MOISY, Philippe, F-30000 Nimes (FR); VENAULT, Laurent, F-30129 Manduel (FR); POCHON, Patrick, F-30126 Saint-Laurent-des Arbres (FR); BERNIER, Gilles, F-84000 Avignon (FR)
(74) Mandataire: Ilgart, Jean-Christophe
(86) Numéro de dépôt international: PCT/EP2008/057035
(87) Numéro de publication internationale: WO 2008/148863

(56) Documents cités:
- WO-A-00/13187

## Description

### DOMAINE TECHNIQUE

La présente invention se rapporte à l'utilisation de l'oxime de butyraldéhyde en tant qu'agent anti-nitreux dans une opération de désextraction du plutonium basée sur une réduction de cet élément, du degré d'oxydation (IV) au degré d'oxydation (III).

L'invention est susceptible de s'appliquer à tous les procédés de retraitement de combustibles nucléaires usés dans lesquels l'emploi d'un composé présentant la double propriété d'être extractible en phase organique et d'être capable d'y détruire l'acide nitreux peut être utile et, notamment, à tous ceux de ces procédés, qui comprennent une ou plusieurs opérations de désextraction réductrice du plutonium.

De telles opérations sont, par exemple, présentes dans le premier cycle de décontamination du procédé PUREX tel qu'il est mis en oeuvre dans les usines modernes de retraitement (usines UP3 et UP2-800 du site de La Hague en France ; usine de Rokkasho au Japon) ainsi que dans le cycle de purification du plutonium, dit "*Deuxième cycle plutonium*", qui lui fait suite.

Elles sont également présentes dans un certain nombre de procédés dérivés du procédé PUREX comme, par exemple, celui décrit dans la demande internationale PCT publiée sous le n° WO 2006/072729 au nom du COMMISSARIAT A L'ENERGIE ATOMIQUE.

### TECHNIQUE ANTÉRIEURE

Les opérations de désextraction réductrice du plutonium consistent à faire passer cet élément d'une phase organique (ou phase solvant), dans laquelle il se trouve au degré d'oxydation (IV), dans une phase aqueuse en le réduisant au degré d'oxydation (III), état dans lequel son affinité pour la phase solvant est très faible.

La réduction du plutonium(IV) en plutonium(III) est induite par un agent réducteur que l'on ajoute à la phase aqueuse et que l'on stabilise par un agent anti-nitreux.

Dans le cas, par exemple, du premier cycle de décontamination du procédé PUREX mis en oeuvre dans les usines précitées de La Hague et de Rokkasho, l'agent réducteur utilisé pour désextraire le plutonium au cours de la partition des flux U/Pu est le nitrate uraneux ou U(IV), tandis que l'agent anti-nitreux est le nitrate d'hydrazinium, encore appelé hydrazine.

Les principales réactions chimiques à considérer sont :
- la réduction du Pu(IV) en Pu(III) par le nitrate uraneux (réaction fonctionnelle) :

   U⁴⁺ + 2Pu⁴⁺ + 2H₂O → UO₂²⁺ + 2Pu³⁺ + 4H⁺
- la réoxydation du Pu(III) en Pu(IV) (réaction parasite) :

   Pu³⁺ + HNO₂ + 1,5H⁺ + 0,5NO₃⁻ → Pu⁴⁺ + 0,5H₂O + 1,5HNO₂
- la destruction de l'acide nitreux en acide azothydrique par l'hydrazine (réaction utile) :

   N₂H₅NO₃ + HNO₂ → N₃H + HNO₃ + 2H₂O ; et
- la destruction de l'hydrazine par le technétium (réactions parasites secondaires) :

   Tc_{oxydé} + N₂H₅NO₃ → Tc_{réduit} + ...

   Tc_{réduit} + HNO₃ → Tc_{oxydé} + HNO₂ + ...

Les deux premières réactions ont lieu dans les phases aqueuse et solvant alors que la réaction de destruction de l'acide nitreux par l'hydrazine n'a lieu qu'en phase aqueuse en raison de l'inextractabilité de l'hydrazine en phase solvant, qui est composée de phosphate de tri-*n*-butyle (TBP) à 30% (v:v) dans un dodécane.

La présence de plutonium(III) dans la phase solvant, même en faible quantité, catalyse l'oxydation du nitrate uraneux par le biais des deux premières réactions et génère de ce fait de l'acide nitreux.

On a pu constater, lors d'études expérimentales menées dans des extracteurs centrifuges de laboratoire que, même avec de faibles temps de séjour en extracteur (de l'ordre de quelques secondes), la consommation du nitrate uraneux est très importante. Cette oxydation du nitrate uraneux se développe essentiellement dans la phase solvant, l'hydrazine n'étant présente qu'en phase aqueuse. Aussi, les schémas de fonctionnement de cette opération prévoient-ils un large excès d'agent réducteur.

L'acide azothydrique formé par la réaction de destruction de l'acide nitreux par l'hydrazine réagit à son tour avec l'acide nitreux selon la réaction :

HN₃ + HNO₂ → N₂ + N₂O + H₂O.

La cinétique de cette réaction est cependant beaucoup plus lente que la réaction de destruction de l'acide nitreux par l'hydrazine de sorte que l'acide azothydrique se retrouve dans les phases aqueuse et solvant effluentes de la partition.

Pour se prémunir des risques liés à l'explosivité de l'acide azothydrique, des vapeurs nitreuses sont donc introduites dans l'extracteur situé en aval, dans le sens de circulation de la phase solvant, de celui dans lequel se déroule la désextraction du plutonium afin de diminuer les quantités d'acide azothydrique présentes dans la phase solvant, d'un facteur trois environ, et d'assurer un excès d'acide nitreux par rapport à l'acide azothydrique résiduel (respect du critère NO₂⁻/N₃⁻ > 2). Le respect de ce critère entraîne ainsi des contraintes supplémentaires d'exploitation.

Enfin, la neutralisation par la soude et le carbonate de sodium de l'acide azothydrique au cours des opérations ultérieures de traitement du solvant se traduit par un apport de sodium complémentaire, élément qui est à considérer pour le respect des teneurs maximales en sodium imposées par les spécifications relatives à la résistance à la lixiviation du verre servant à la vitrification des déchets.

Ainsi, le fait que l'hydrazine ne soit pas extractible en phase solvant et n'agisse par conséquent qu'en phase aqueuse conduit à une consommation importante de réactifs et à la production d'espèces chimiques contraignantes pour l'exploitation du procédé.

Les Inventeurs se sont donc fixé pour but de trouver un composé qui, non seulement soit capable de détruire l'acide nitreux en réagissant avec lui mais soit également extractible par une phase solvant du type de celles utilisées dans les opérations de désextraction réductrice du plutonium, de sorte à pouvoir bloquer la réoxydation du plutonium(III) en plutonium(IV) et limiter ainsi, voire éliminer, toutes les contraintes liées à cette réoxydation.

### EXPOSÉ DE L'INVENTION

Ce but, et d'autres encore, sont atteints, par l'invention qui propose d'utiliser l'oxime de butyraldéhyde en tant qu'agent anti-nitreux dans une opération de désextraction réductrice du plutonium.

Cette oxime, qui répond à la formule :

CH₃- (CH₂)₂-CH=N-OH,

est plus communément appelée "*butyraldéhyde oxime*" dans la littérature scientifique. Aussi, sera-t-elle appelée de la sorte dans ce qui suit.

Conformément à l'invention, l'opération de désextraction réductrice du plutonium comprend :
a) la mise en contact d'une phase solvant non miscible à l'eau, contenant un agent extractant dans un diluant organique, ainsi que le plutonium à désextraire, avec une phase aqueuse nitrique contenant un agent réducteur capable de réduire le plutonium(IV) en plutonium(III) et la butyraldéhyde oxime ; puis
b) la séparation des phases solvant et aqueuse l'une de l'autre.

Dans cette opération, l'agent réducteur est, de préférence, du nitrate uraneux.

La butyraldéhyde oxime peut être utilisée comme seul agent anti-nitreux ou, au contraire, conjointement avec un deuxième agent anti-nitreux capable de détruire l'acide nitreux en phase aqueuse. Dans ce cas, le deuxième agent anti-nitreux, qui est également présent dans la phase aqueuse nitrique utilisée à l'étape a), est, de préférence, du nitrate d'hydrazinium.

Quoi qu'il en soit, la concentration en butyraldéhyde oxime de la phase aqueuse va, de préférence, de 0,2 mole/L à 0,5 mole/L.

Quant à la concentration en nitrate d'hydrazinium de la phase aqueuse, lorsque celui-ci est présent, elle va, de préférence, de 0,05 mole/L à 0,1 mole/L.

Conformément à l'invention, l'extractant présent dans la phase solvant peut notamment être un phosphate de tri-alkyle comme le phosphate de tri-*n*-butyle (TBP), le phosphate de tri-isobutyle (TiBP) ou encore le phosphate de tri-isoamyle (TiAP), le TBP étant préféré.

Le diluant organique dans lequel se trouve cet extractant peut être, lui, choisi parmi les différents hydrocarbures proposés pour les extractions liquide-liquide comme le toluène, le xylène, le *t*-butylbenzène, le tri-isopropylbenzène, le kérosène et les dodécanes, linéaires ou ramifiés, comme le n-dodécane ou le tétrapropylène hydrogéné (TPH), ces deux derniers hydrocarbures étant préférés.

Par ailleurs, l'opération de désextraction réductrice du plutonium est, de préférence, réalisée au cours du retraitement d'un combustible nucléaire usé, c'est-à-dire qu'elle représente l'une des opérations mises en oeuvre dans un procédé de retraitement d'un combustible nucléaire usé.

L'utilisation de la butyraldéhyde oxime en tant qu'agent anti-nitreux présente beaucoup d'avantages.

En effet, cette oxime s'étant révélée être extractible en phase solvant et capable d'y bloquer très efficacement la réoxydation du plutonium(III) en plutonium(IV) grâce à un fort pouvoir anti-nitreux, son utilisation permet :
■ de réduire considérablement les quantités de nitrate uraneux et d'hydrazine (si cette dernière est utilisée) nécessaires à la réalisation d'une opération de désextraction réductrice du plutonium ;
■ de réduire par conséquent le nombre de points d'introduction de ces réactifs dans l'appareillage dévolu à cette opération et donc de simplifier cet appareillage ;

■ de réduire également, voire de supprimer, toutes les contraintes existant en aval d'une opération de désextraction réductrice du plutonium du fait de la réoxydation du plutonium(III) en plutonium(IV) comme, par exemple, dans le cadre d'un procédé de type PUREX, la nécessité s'apporter des vapeurs nitreuses pour limiter les risques d'explosivité liés à la présence d'acide azothydrique dans la phase solvant, et du sodium supplémentaire pour neutraliser cet acide ;
■ d'augmenter le facteur de concentration du plutonium au cours de sa désextraction et par conséquent de simplifier le schéma de fonctionnement des opérations visant à purifier le plutonium ainsi désextrait avec, à la clé, une réduction de la consommation en réactifs et des dimensions des appareillages.

D'autres dispositions et avantages de l'invention apparaîtront à la lecture des exemples qui suivent et qui se réfèrent aux figures annexées.

Bien entendu, ces exemples ne sont donnés qu'à titre d'illustrations de l'objet de l'invention et ne constituent en aucun cas une limitation de cet objet.

### BRÈVE DESCRIPTION DES DESSINS

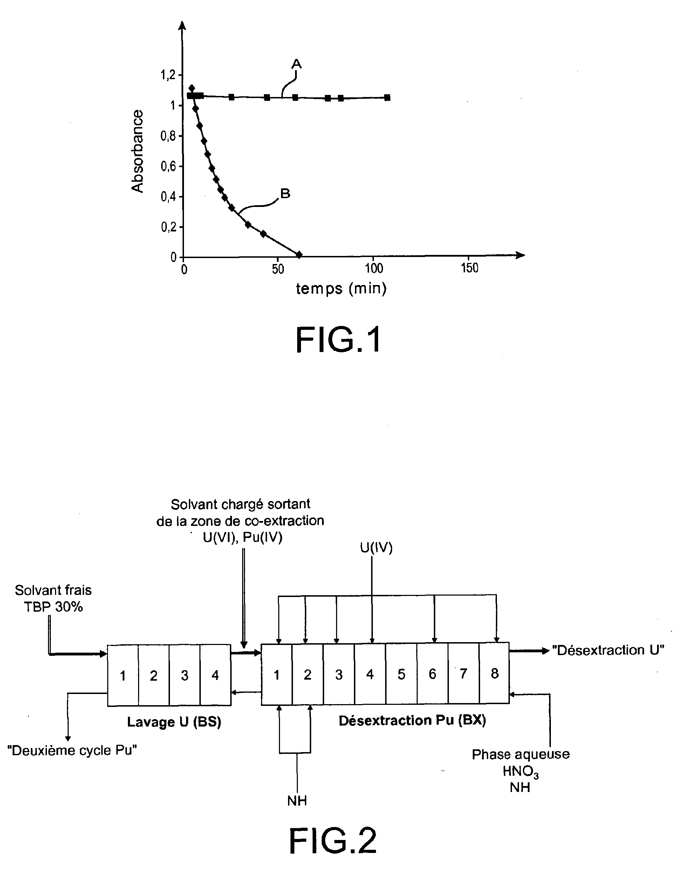

La figure 1 représente, sous la forme de courbes, l'évolution en fonction du temps, exprimé en minutes, de l'absorbance (λ = 650 nm) d'une phase solvant telle qu'obtenue à l'issue d'une opération de désextraction réductrice du plutonium au nitrate uraneux, cette opération de désextraction ayant été réalisée soit avec une phase aqueuse nitrique contenant du nitrate uraneux, de l'hydrazine et de la butyraldéhyde oxime (courbe A), soit avec une phase aqueuse nitrique contenant du nitrate uraneux, de l'hydrazine et de l'acétaldoxime (courbe B).
La figure 2 représente, sous une forme schématique, une opération de désextraction réductrice du plutonium au nitrate uraneux telle qu'elle est typiquement mise en oeuvre au cours du premier cycle de décontamination d'un procédé de type PUREX avec partition des flux U/Pu.

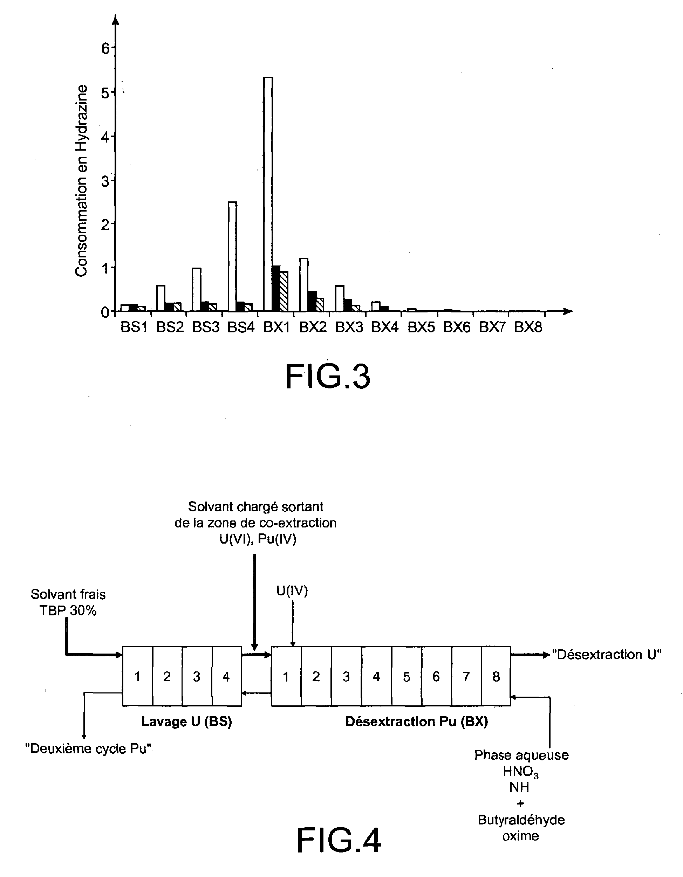

La figure 3 représente, sous la forme d'histogrammes, les profils de consommation en hydrazine tels que déterminés par le code PAREX pour trois schémas différents de mise en oeuvre de l'opération illustrée sur la figure 2 : un premier schéma (rectangles blancs) où seule l'hydrazine est utilisée comme agent anti-nitreux ; un deuxième schéma (rectangles noirs) où la butyraldéhyde oxime est utilisée conjointement avec l'hydrazine, sans réduction des quantités de nitrate uraneux et d'hydrazine utilisées dans le premier schéma ; et un troisième schéma (rectangles hachurés) où la butyraldéhyde oxime est utilisée conjointement avec l'hydrazine, avec réduction des quantités de nitrate uraneux et d'hydrazine utilisées dans le premier schéma.
La figure 4 représente, sous une forme schématique, une opération de désextraction réductrice du plutonium au nitrate uraneux telle qu'elle serait susceptible d'être mise en oeuvre dans le premier cycle de décontamination d'un procédé de type PUREX avec partition des flux U/Pu, si l'on utilisait la butyraldéhyde oxime en tant qu'agent anti-nitreux.

### EXPOSÉ DÉTAILLÉ DE MODES DE RÉALISATION PARTICULIERS

### Exemple 1 : Mise en évidence de l'extractabilité et du pouvoir anti-nitreux en phase solvant de la butyraldéhyde oxime

L'aptitude de la butyraldéhyde oxime à être extraite en phase solvant et à y détruire l'acide nitreux a été mise en évidence par deux tests différents de désextraction réductrice du plutonium au nitrate uraneux : un premier test qui a été réalisé dans des conditions simulant le fonctionnement d'un étage de mélangeur-décanteur et un deuxième test qui a été réalisé dans un extracteur centrifuge de laboratoire.

### 1) Test simulant le fonctionnement d'un étage de mélangeur-décanteur :

Ce test consiste à :
- préparer une phase aqueuse contenant :
   25 g/L de Pu(IV),
   2,5 moles/L d'acide nitrique,
   0,1 mole/L d'hydrazine, et
   0,5 mole/L d'une oxime,
   cette oxime étant soit la butyraldéhyde oxime, soit l'acétaldoxime de formule : CH₃-CH=N-OH ;
- équilibrer cette phase aqueuse avec une phase solvant composée de TBP à 30% (v/v) dans du TPH (elle-même préalablement équilibrée avec une solution d'acide nitrique de même concentration en acide), le rapport volumique de la phase solvant à la phase aqueuse (O/A) étant de 2 ;
- ajouter à la phase aqueuse du nitrate uraneux à raison de 40 g/L de phase aqueuse ;
- mélanger les phases aqueuse et solvant pendant 1 minute ;
- séparer les phases aqueuse et solvant par centrifugation ; puis
- mesurer, à intervalles sur une période de 120 minutes, l'absorbance de la phase solvant, à la longueur d'onde de 650 nm pour apprécier l'évolution de sa concentration en nitrate uraneux.

En effet, soit l'oxime testée est extraite en phase solvant et y détruit suffisamment l'acide nitreux pour bloquer la réoxydation du Pu(III) en Pu(IV) et alors la concentration en nitrate uraneux de la phase solvant reste stable ; soit ce n'est pas le cas et alors la concentration en nitrate uraneux de la phase solvant chute puisque celui-ci est consommé par la réoxydation du Pu(III) en Pu(IV).

Le test est réalisé à température ambiante.

La figure 1 représente, sous forme de courbes, les valeurs d'absorbance obtenues en fonction du temps, la courbe A correspondant au test réalisé avec la phase aqueuse contenant la butyraldéhyde oxime, la courbe B correspondant au test réalisé avec la phase aqueuse contenant l'acétaldoxime.

Comme le montre cette figure, la concentration en nitrate uraneux de la phase solvant est stable plus de 120 minutes après sa séparation de la phase aqueuse dans le cas du test réalisé avec la phase aqueuse contenant la butyraldéhyde oxime, ce qui signe une réelle aptitude de cette oxime à être extraite en phase solvant et à y détruire l'acide nitreux et, donc, à bloquer la réoxydation du Pu(III) en Pu(IV).

Par contre, dans le cas du test réalisé avec la phase aqueuse contenant l'acétaldoxime, pourtant structurellement très proche de la butyraldéhyde oxime, la concentration en nitrate uraneux de la phase solvant chute rapidement pour atteindre l'axe des abscisses environ 60 minutes après sa séparation de la phase aqueuse.

### 2. Test en extracteur centrifuge de laboratoire :

Les extracteurs centrifuges de laboratoire sont des appareils monoétage qui comprennent un cylindre (ou bol) tournant autour d'un axe central fixe grâce à un moteur électrique alimenté en courant continu, et des systèmes permettant l'introduction dans ce cylindre ainsi que l'évacuation hors de ce cylindre d'une phase aqueuse et d'une phase solvant.

Le bol comprend une chambre de mélange et une chambre de décantation. Les phases aqueuse et solvant, amenées par leur circuit d'alimentation respectif, sont véhiculées par un conduit commun jusqu'à la chambre de mélange où s'effectue un rapide brassage. Puis, l'émulsion obtenue se déverse dans la chambre de décantation où les phases aqueuse et solvant se séparent rapidement sous l'effet du champ centrifuge. Elles sont ensuite extraites de l'appareil par des collecteurs centripètes et évacuées par deux canaux indépendants l'un de l'autre.

Ces appareils permettent de vérifier, à l'échelle d'un laboratoire, la faisabilité et la validité de procédés destinés à être mis en oeuvre dans des usines de retraitement de combustibles nucléaires usés.

Le test a été réalisé en utilisant les paramètres opératoires suivants :

### • Phase solvant entrante :

TBP à 30% (v/v) dans du TPH
Concentration en Pu(IV) : 20,86 g/L
Concentration en HNO₃ : 0,2 mole/L
Débit : 252 mL/h

### • Phase aqueuse entrante :

Concentration en U(IV) : 83 g/L
Concentration en HNO₃ : 1 mole/L
Concentration en hydrazine : 0,11 mole/L
Concentration en butyraldéhyde oxime : 0,5 mole/L
Débit : 101 mL/h
   - Rapport U(IV)/Pu(IV) : 1,6
   - Rapport volumique O/A : 2,5
   - Temps de séjour des phases dans le mélangeur : 20 s.

Les résultats sont présentés dans le tableau I ci-après.

**Tableau I**

| **Phase solvant sortante :** | |
|---|---|
| Concentration en Pu(IV) en g/L | 1 |
| Concentration en U(IV) en g/L | 15,2 |

| **Phase aqueuse sortante :** | |
|---|---|
| Concentration en Pu en g/L | 49,3 |
| Concentration en U(IV) en g/L | 19,2 |
| Concentration en HNO₃ en mole/L | 1,5 |
| Concentration en hydrazine en mole/L | 0,13 |

| **Performances** : | |
|---|---|
| Facteur de décontamination Pu | 20,9 |
| U(IV) _{consommé}/Pu_{désextrait} | 0,56 |

Ce tableau montre que le rapport du nitrate uraneux consommé au plutonium désextrait de la phase solvant est très proche de 0,5, ce qui signifie que peu de plutonium(III) s'est réoxydé dans cette phase solvant. Par ailleurs, la concentration en nitrate uraneux de la phase solvant est restée stable pendant plus de deux heures après sa sortie de l'extracteur.

A titre comparatif, des tests similaires ayant été réalisés dans le même type d'extracteur mais en utilisant une phase aqueuse ne contenant que de l'hydrazine comme agent anti-nitreux, ont conduit à des rapports du nitrate uraneux consommé au plutonium désextrait deux fois plus importants pour un facteur de décontamination du plutonium deux fois plus faible.

La butyraldéhyde oxime est donc capable, contrairement à l'hydrazine, de détruire l'acide nitreux en phase solvant et de bloquer, ainsi, la réoxydation du plutonium(III) en plutonium(IV) dans cette phase.

### Exemple 2 : Application de l'invention à une désextraction réductrice du plutonium en mélangeurs-décanteurs

La butyraldéhyde oxime peut avantageusement être utilisée dans une opération de désextraction sélective du plutonium d'un premier cycle de décontamination d'un procédé de type PUREX avec partition des flux U/Pu.

Il s'agit d'une opération qui utilise typiquement du nitrate uraneux comme agent réducteur, de l'hydrazine en tant qu'agent anti-nitreux, et qui est mise en oeuvre dans des mélangeurs-décanteurs.

Comme le montre la figure 2 qui représente schématiquement cette opération, la phase solvant chargée en U(VI) et en Pu(IV) provenant de la zone de co-extraction du cycle entre, dans la zone dite "*Désextraction Pu*", notée BX, qui comporte 8 étages de mélangeurs-décanteurs.

A chaque étage, cette phase solvant est mélangée avec une phase aqueuse nitrique de faible acidité (0,05 M à 2 M) qui contient le nitrate uraneux et l'hydrazine, puis séparée de cette phase.

La phase aqueuse sortant de la zone "*Désextraction Pu*" entre dans une zone dite "*Lavage U*", notée BS, qui comporte 4 étages de mélangeurs-décanteurs et dont la fonction est d'éliminer de cette phase aqueuse (par réextraction dans une phase de solvant frais) la fraction d'uranium(VI) ayant été désextraite avec le plutonium. La phase solvant sortant de la zone "*Désextraction Pu*" est, quant à elle, dirigée vers une zone "*Désextraction U*" dont la fonction est de désextraire l'uranium(VI) de cette phase.

L'opération de désextraction du plutonium ainsi mise en oeuvre nécessite l'utilisation d'un large excès de nitrate uraneux (dix fois la quantité stoechiométrique) et d'hydrazine, car les phénomènes de réoxydation parasites du plutonium sont très importants en raison des temps de séjour relativement longs de la phase solvant dans les compartiments de décantation des mélangeurs-décanteurs.

Le nitrate uraneux et l'hydrazine sont donc introduits en plusieurs endroits de la zone "*Désextraction Pu*" pour garantir une présence suffisante de nitrate uraneux pendant toute la durée de l'opération de désextraction du plutonium.

Pour évaluer le gain lié à l'utilisation de la butyraldéhyde oxime en tant qu'agent anti-nitreux, trois schémas différents ont été simulés avec le code PAREX qui est un logiciel qualifié pour ce type d'opération et qui est utilisé pour la conception et les analyses de fonctionnement des ateliers industriels des usines de La Hague.

Le premier schéma (ci-après schéma 1) correspond à un schéma classique où seule l'hydrazine est utilisée comme agent anti-nitreux.

Le deuxième schéma (ci-après schéma 2) correspond à un schéma où la butyraldéhyde oxime est utilisée conjointement avec l'hydrazine, en quantité suffisante pour bloquer la réaction de réoxydation du plutonium(III) en phase solvant, sans réduction des quantités de nitrate uraneux et d'hydrazine employées dans le schéma classique.

Le troisième schéma (ci-après schéma 3) correspond à un schéma où, à l'utilisation de la butyraldéhyde oxime, s'ajoute une réduction des quantités de nitrate uraneux et d'hydrazine employées dans le schéma classique.

Les résultats de ces simulations sont présentés :
■ dans le tableau II ci-après qui précise, pour chacun des schémas 1, 2 et 3, les rapports entre les quantités de nitrate uraneux et d'hydrazine et la quantité de plutonium introduits dans la zone "*Désextraction Pu*", les rapports entre les quantités de nitrate uraneux et d'hydrazine consommés et la quantité de plutonium introduit dans la zone "*désextraction Pu*", le rapport entre la quantité d'acide azothydrique produit et la quantité d'hydrazine consommée et enfin le rapport entre la quantité d'acide azothydrique produit et la quantité de plutonium introduit dans la zone "*Désextraction Pu*"; et
■ sur la figure 3 qui représente, pour les trois schémas, la consommation en hydrazine telle qu'obtenue dans chacun des étages des zones "*Lavage U*" (étages BS1 à BS4) et "*Désextraction Pu*" (étages BX1 à BX8), les rectangles blancs correspondant au schéma 1, les rectangles noirs correspondant au schéma 2 et les rectangles hachurés correspondant au schéma 3.

Il est à noter qu'il a été considéré, dans ces simulations, que l'hydrazine était consommée préférentiellement à la butyraldéhyde oxime en phase aqueuse. La consommation de la butyraldéhyde oxime n'a donc pas été simulée mais on peut penser que l'absence de réoxydation du Pu(III) en phase solvant conduit à une consommation très faible de ce réactif.

**Tableau II**

| | **Réactifs introduits** | | **Consommation en nitrate uraneux et en hydrazine** | | **Production de HN₃** | |
|---|---|---|---|---|---|---|
| **Schéma** | U (IV) /Pu_{int.} | NH/Pu_{int.} | U(IV)_{cons}./Pu_{int.} | NHcons. / Pu_{int.} | HN₃/NH_{cons.} | HN₃/Pu_{int.} |
| **1** | 5 | 15,9 | 2,31 | 1,71 | 0,57 | 0, 98 |
| **2** | 5 | 15,9 | 0,5 (-78,4%) | 0,4 (-76, 6%) | 0,51 (-10,5%) | 0,2 (-79, 6%) |
| **3** | 0,56 | 7,34 | 0,5 (-78,4%) | 0,3 (-82,5%) | 0,46 (-19,3%) | 0,14 (-82,3%) |

Ce tableau et cette figure montrent que l'ajout de butyraldéhyde oxime à la phase aqueuse permet de bloquer les phénomènes de réoxydation du Pu(III) en phase solvant et que ce blocage se traduit par une réduction d'environ 80% de la consommation en nitrate uraneux, de la consommation en hydrazine et de la production d'acide azothydrique.

Ceci autorise une réduction importante des quantités de nitrate uraneux et d'hydrazine à introduire dans la zone "*Désextraction Pu*" - comme ce qui est proposé dans le schéma 3 (diminution d'un facteur 10 quasiment de la quantité de nitrate uraneux introduit et de moitié de la quantité d'hydrazine introduite) - qui autorise elle-même une suppression des nombreux points d'introduction de ces réactifs montrés sur la figure 2.

Ainsi, il peut être envisagé de réaliser la désextraction du plutonium selon le schéma représenté sur la figure 4, avec une seule introduction de nitrate uraneux en début de la zone "*Désextraction Pu*" et une seule introduction d'agent anti-nitreux (butyraldéhyde oxime + hydrazine) en fin de cette même zone, d'où une simplification de l'appareillage utilisé dans cette zone.

Bien entendu, il convient que la butyraldéhyde oxime soit présente à une concentration suffisante pour bloquer la réoxydation du Pu(III) en phase solvant. Une concentration dans la phase aqueuse entrant dans la zone "*Désextraction Pu*" allant de 0,2 mole/L à 0,5 mole/L apparaît être suffisante, la concentration en hydrazine dans cette phase pouvant alors être de 0,05 mole/L à 0,1 mole/L.

Par ailleurs, il s'avère que l'adoption d'un facteur de concentration élevé au niveau des opérations de désextraction réductrice du plutonium est souvent limitée par l'augmentation des phénomènes de réoxydation parasites du plutonium qu'elle génère. En effet, une augmentation du facteur de concentration conduit à une augmentation des concentrations en plutonium et en acide, ce qui accélère la cinétique de la réaction de réoxydation du plutonium(III) en plutonium(IV).

Aussi, l'utilisation d'un agent anti-nitreux capable de bloquer cette réoxydation comme la butyraldéhyde oxime permet-elle d'envisager aussi une simplification du schéma de fonctionnement d'un procédé de type PUREX avec partition des flux U/Pu, au niveau des ateliers dévolus à la purification du flux plutonium, avec à la clé une diminution de la consommation en réactifs et des dimensions des appareillages.

En effet, lorsque le flux de plutonium produit au cours du "*Deuxième cycle plutonium*" n'est pas suffisamment concentré pour convertir ensuite ce plutonium en oxyde de plutonium, une partie de la production du plutonium est recyclée à l'entrée de ce cycle pour obtenir un flux plus concentré. Le flux de matière devant être traité est donc majoré, cette majoration pouvant aller, dans certains cas, jusqu'à doubler le flux de plutonium devant être traité. Il en résulte une consommation des réactifs accrue ainsi qu'un dimensionnement des appareillages plus conséquent qui pourraient être évités par l'utilisation de butyraldéhyde oxime au cours de la "*Désextraction Pu*".

### REFERENCE CITEE :

WO 2006/072729

## Revendications

1. Utilisation de l'oxime de butyraldéhyde en tant qu'agent anti-nitreux dans une opération de désextraction réductrice du plutonium d'un procédé de retraitement de combustibles nucléaires usés, ladite opération comprenant :
a) la mise en contact d'une phase solvant non miscible à l'eau, contenant un agent extractant dans un diluant organique ainsi que le plutonium à désextraire avec une phase aqueuse nitrique contenant un agent capable de réduire le plutonium(IV) en plutonium (III) et l'oxime de butyraldéhyde ; puis
b) la séparation des phases solvant et aqueuse l'une de l'autre.

2. Utilisation selon la revendication 1, dans laquelle l'agent réducteur est du nitrate uraneux.

3. Utilisation selon la revendication 1 ou la revendication 2, dans laquelle la phase aqueuse nitrique contient un deuxième agent anti-nitreux, cet agent anti-nitreux étant capable de détruire l'acide nitreux en phase aqueuse.

4. Utilisation selon la revendication 3, dans laquelle le deuxième agent anti-nitreux est du nitrate d'hydrazinium.

5. Utilisation selon l'une quelconque des revendications 1 à 4, dans laquelle la concentration en oxime de butyraldéhyde de la phase aqueuse est de 0,2 mole/L à 0,5 mole/L.

6. Utilisation selon la revendication 4 ou la revendication 5, dans laquelle la concentration en nitrate d'hydrazinium de la phase aqueuse est de 0,05 mole/L à 0,1 mole/L.

7. Utilisation selon l'une quelconque des revendications 1 à 6, dans laquelle l'extractant est un phosphate de tri-alkyle.

8. Utilisation selon la revendication 7, dans laquelle le phosphate de tri-alkyle est du phosphate de tri-*n*-butyle.

9. Utilisation selon l'une quelconque des revendications 1 à 8, dans laquelle le diluant organique est un dodécane.

10. Utilisation selon la revendication 9, dans laquelle le dodécane est du *n*-dodécane.

## Patentansprüche

1. Verwendung des Oxims von Butyraldehyd als anti-nitroses Mittel in einem Verfahren zur reduktiven Extraktion von Plutonium bei der Wiederaufbereitung von Kernbrennstoffen, wobei das Verfahren umfasst:
a) Kontaktieren einer Lösungsmittelphase, welche mit Wasser nicht mischbar ist, umfassend ein Extraktionsmittel in einem organischen Verdünnungsmittel und das zu extrahierende Plutonium mit einer Salpetersäure enthaltenden wässrigen Phase umfassend ein Mittel, welches Plutonium (IV) zu Plutonium (III) reduzieren kann und das Oxim von Butyraldehyd; und
b) Abtrennen der Lösungsmittelphase und der wässrigen Phase voneinander.

2. Verwendung nach Anspruch 1, wobei das Reduktionsmittel Uran-Nitrat ist.

3. Verwendung nach Anspruch 1 oder Anspruch 2, wobei die Salpetersäure enthaltende wässrige Phase ein zweites anti-nitroses Mittel enthält, wobei dieses anti-nitrose Mittel zur Zerstörung von salpetriger Säure in wässriger Phase geeignet ist.

4. Verwendung nach Anspruch 3, wobei das zweite Anti-nitrose Mittel Hydraziniumnitrat ist.

5. Verwendung nach einem der Ansprüche 1 bis 4, wobei die Konzentration des Oxims von Butyraldehyd in der wässrigen Phase 0,2 mol / I bis 0,5 mol / I beträgt.

6. Verwendung nach Anspruch 4 oder Anspruch 5, wobei die Konzentration von Hydraziniumnitrat in der wässrigen Phase 0,05 mol / I bis 0,1 mol / beiträgt.

7. Verwendung nach einem der Ansprüche 1 bis 6, wobei das Extraktionsmittel ein Tri-alkylphosphat ist.

8. Verwendung nach Anspruch 7, wobei das Tri-alkylphosphat Tri-*n-*butylphosphat ist.

9. Verwendung nach einem der Ansprüche 1 bis 8, wobei das organische Verdünnungsmittel ein Dodecan ist.

10. Verwendung nach Anspruch 9, wobei das Dodecan *n*-Dodecan ist.

## Claims

1. Use of butyraldehyde oxime as an anti-nitrous agent in an operation for the reductive stripping of plutonium of a process for reprocessing spent nuclear fuels, said operation including:
a) placing in contact a water-immiscible solvent phase, containing an extracting agent in an organic diluent, and also the plutonium to be stripped, with a nitric aqueous phase containing an agent capable of reducing plutonium(IV) to plutonium(III) and butyraldehyde oxime; and then
b) separating the solvent and aqueous phases.

2. Use according to Claim 1, in which the reducing agent is uranous nitrate.

3. Use according to Claim 1 or Claim 2, in which the nitric aqueous phase contains a second anti-nitrous agent, this anti-nitrous agent being capable of destroying the nitrous acid in the aqueous phase.

4. Use according to Claim 3, in which the second anti-nitrous agent is hydrazinium nitrate.

5. Use according to any one of Claims 1 to 4, in which the butyraldehyde oxime concentration of the aqueous phase is from 0.2 mol/l to 0.5 mol/l.

6. Use according to Claim 4 or Claim 5, in which the hydrazinium nitrate concentration of the aqueous phase is from 0.05 mol/l to 0.1 mol/l.

7. Use according to any one of Claims 1 to 6, in which the extracting agent is a trialkyl phosphate.

8. Use according to Claim 7, in which the trialkyl phosphate is tri-*n*-butyl phosphate.

9. Use according to any one of Claims 1 to 8, in which the organic diluent is a dodecane.

10. Use according to Claim 9, in which the dodecane is *n*-dodecane.
